# EUROPÄISCHE PATENTSCHRIFT

(11) **EP 2 910 500 B1**
(45) Veröffentlichungstag und Bekanntmachung des Hinweises auf die Patenterteilung: **17.05.2017**
(21) Anmeldenummer: 15155931.7
(22) Anmeldetag: 20.02.2015
(51) Int. Cl.: B65G 35/00, B29C 49/42, B65G 43/08, G06M 7/02

(54) **Verfahren und Vorrichtung zum Transportieren von Kunststoffvorformlingen, sowie Verwendung einer entsprechenden Schaltungsanordnung**
Method and device for transporting plastic preforms as well as use of circuit assembly for such a device
Procédé et dispositif de transport d'ébauches en plastique ainsi qu'utilisation d'un circuit adapté à un tel dispositif

(30) Priorität: 20.02.2014 DE 102014102203
(43) Veröffentlichungstag der Anmeldung: 26.08.2015
(73) Patentinhaber: Krones AG, 93073 Neutraubling (DE)
(72) Erfinder: Seger, Martin, 93073 Neutraubling (DE); Beutl, Jürgen, 93073 Neutraubling (DE); Vierheilig, Johannes, 93073 Neutraubling (DE); Nebl, Florian, 93073 Neutraubling (DE); Paul, Christian, 93073 Neutraubling (DE); Seidl, Andreas, 93073 Neutraubling (DE)
(74) Vertreter: Bittner, Bernhard

(56) Entgegenhaltungen:
- EP-A1- 2 578 504
- WO-A1-2010/006462
- DE-A1- 10 121 160
- DE-A1-102009 016 593
- GB-A- 2 020 614
- US-A- 4 356 907

## Beschreibung

Die vorliegende Erfindung bezieht sich auf ein Verfahren und eine Vorrichtung zum Transportieren von Kunststoffvorformlingen. Derartige Vorrichtungen sind aus dem Stand der Technik seit langem bekannt. Dabei ist es bekannt, dass die Kunststoffvorformlinge zunächst mittels eines Ofens erwärmt werden und anschließend beispielsweise einer Blasformmaschine zugeführt werden, welche diese Kunststoffvorformlinge zu Kunststoffbehältnissen bläst.

Dabei sind diese Vorrichtungen zum Transportieren von Kunststoffvorformlingen oftmals mehrstufig aufgebaut. So können Zuführeinrichtungen vorgesehen sein, welche die Kunststoffvorformlinge einer Sortiereinrichtung zuführen, beispielsweise einem sogenannten Rollensortierer. Bei einem derartigen Rollensortierer laufen im Stand der Technik Zuführbänder oder Zuführeinrichtungen für die Kunststoffvorformlinge mit einer fest parametrierten Geschwindigkeit. Eine solche gattungsgemäße Vorrichtung und das entsprechendes Verfahren nach dem Oberbegriff des Anspruchs 1 ist aus WO2010/006462 bekannt. Die jeweilige Geschwindigkeit ist für eine Größe der Kunststoffvorformlinge fest hinterlegt. Damit regelt ein derartiger Rollensortierer je nach Länge einer Sortierstrecke mit 3 bis 4 unterschiedlichen Geschwindigkeiten. Für diese Art der Regelung werden im Normalfall mehrere, beispielsweise 3 bis 4 Lichtschranken eingesetzt bzw. benötigt.

Derzeit tritt jedoch im Stand der Technik das Problem auf, dass das Einstellen dieser Parameter für die verschiedenen Geschwindigkeiten sehr zeitaufwendig ist. Insbesondere kann es im Laufe des Betriebes zu Abweichungen kommen, welche damit bei einer festen Parametrierung zu Problemen führen. So ist es beispielsweise möglich, dass sich im Laufe eines Arbeitstages die Raumtemperatur ändert und damit auch die physikalische Beschaffenheit der Kunststoffvorformlinge. Diese können dann beispielsweise mehr oder weniger kleben. In diesem Falle müssen jedoch die Parameter immer nachgestellt werden. Der Stand der Technik jedoch bewirkt lediglich eine Steuerung, was auch zu Ausfällen führen kann.

Der vorliegenden Erfindung liegt daher die Aufgabe zugrunde, ein Verfahren und eine Vorrichtung zur Verfügung zu stellen, welche eine flexiblere Reaktionsmöglichkeit auf derartige Schwankungen, beispielsweise auch Tagesschwankungen, ermöglichen. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Transportieren von Kunststoffvorformlingen werden die Kunststoffvorformlinge mittels einer Zuführeinrichtung einer Transporteinrichtung zugeführt und die Transporteinrichtung weist einen ersten Rollenkörper sowie einen zweiten Rollenkörper auf, welche sich im Wesentlichen parallel zueinander erstrecken, wobei der Kunststoffvorformling zwischen diesen Rollen transportiert wird und wobei ein Abschnitt der Kunststoffvorformlinge von beiden Rollen gestützt wird und wobei ein weiterer Abschnitt der Kunststoffvorformlinge zwischen den Rollen (insbesondere durch einen zwischen den Rollen gebildeten Spalt) hindurchtritt.

Erfindungsgemäß wird mittels einer ersten Messeinrichtung wenigstens ein erster für einen Belegungszustand der Kunststoffvorformlinge bzw. einem Belegungszustand der Vorrichtung mit den Kunststoffvorformlingen charakteristischer Wert erfasst und mittels einer zweiten Messeinrichtung, welche sich in der Transportrichtung der Kunststoffvorformlinge nach der ersten Messeinrichtung befindet, ein zweiter für den Belegungszustand der Kunststoffvorformlinge bzw. einen Belegungszustand der Vorrichtung mit den Kunststoffvorformlingen charakteristischer Wert erfasst und es wird unter Zugrundelegung beider Werte wenigstens eine Stellgröße der Zuführeinrichtung oder der Transporteinrichtung geregelt. Insbesondere erfolgt eine Regelung der besagten Stellgröße der Zuführeinrichtung oder der Transporteinrichtung. Bevorzugt wird der charakteristische Wert mittels wenigstens einer Messeinrichtung und bevorzugt mittels zwei Messeinrichtungen kontinuierlich erfasst und diese Werte jeweils bei der Regelung der jeweiligen Stellgröße berücksichtigt.

Vorteilhaft handelt es sich bei dem charakteristischen Wert etwa um eine Anzahl von Kunststoffvorformlingen in einem bestimmten von der Messeinrichtung erfassten Bereich oder auch um eine Anzahl derjenigen Kunststoffvorformlinge, die diesen Bereich in einer gewissen Zeitspanne passiert. So kann beispielsweise mittels einer Messeinrichtung innerhalb eines vorgegebenen Intervalls die Anzahl von Ereignissen gezählt werden, welche beispielsweise charakteristisch für das Auftreten von Kunststoffvorformlingen sind.

Bei einer weiteren vorteilhaften Ausführungsform weist die Vorrichtung auch eine Ausschleuseinrichtung auf, welche fehlerhafte oder fehlerhaft positionierte Kunststoffvorformlinge ausschleust. So kann es beispielsweise möglich sein, dass Kunststoffvorformlinge nicht in einer üblichen hängenden Position zwischen den Rollen transportiert werden, sondern beispielsweise liegend. In diesem Falle können diese von der Ausschleuseinrichtung erfasst und aus dem Transportvorgang ausgeschleust werden.

Vorteilhaft wird ein Bereich der Kunststoffvorformlinge, wie insbesondere ein Tragring, zwischen den beiden Rollen abgestützt und ein anderer Bereich der Kunststoffvorformlinge, wie etwa ein Grundkörper, liegt bzw. durchdringt einen Spalt, der zwischen den beiden Rollen gebildet wird.

Es wird daher erfindungsgemäß vorgeschlagen, dass eine Regelung wenigstens der Zuführeinrichtung oder der Transporteinrichtung unter Berücksichtigung beider Messwerte der beiden Messeinrichtungen vorgenommen wird. Auf diese Weise ist es möglich, sowohl auf schleichende bzw. langfristige Änderungen zu reagieren als auch auf kurzfristige Schwankungen, beispielsweise in der Dosierung.

Bei einem vorteilhaften Verfahren wird wenigstens eine Stellgröße der Zuführeinrichtung unter Zugrundelegung beider der genannten Werte gesteuert. Bevorzugt wird die Stellgröße der Transporteinrichtung nur unter Zugrundelegung bzw. Berücksichtigung eines der beiden Messwerte geregelt.

Bei der Stellgröße der Zuführeinrichtung kann es sich beispielsweise um eine Zuführgeschwindigkeit handeln, mit der die Kunststoffvorformlinge von der Zuführeinrichtung der Transporteinrichtung zugeführt werden, wie etwa die Geschwindigkeit der oben erwähnten Transportbänder, welche die Kunststoffvorformlinge zuführen.

Vorteilhaft ist wenigstens eine Stellgröße der Transporteinrichtung aus einer Gruppe von Stellgrößen ausgewählt, welche eine Drehgeschwindigkeit wenigstens eines Rollenkörpers und bevorzugt beider Rollenkörper, eine Neigung der Rollenkörper, einen Abstand der Rollenkörper zueinander, eine Parallelität der Rollenkörper oder eine Segmentierung der Rollenkörper umfasst. Diese Größen bzw. Parameter wirken sich auf die Transportgeschwindigkeit der Kunststoffvorformlinge aus.

So kann beispielsweise durch eine Variation der Drehgeschwindigkeit der Rollenkörper auch die Fortbewegungsgeschwindigkeit der Kunststoffvorformlinge beeinflusst werden. Auch durch eine Veränderung des Abstandes zwischen den Rollenkörpern ist es möglich, die Transportgeschwindigkeit zu verändern, da durch diesen Abstand geregelt wird, mit welchen Bereichen der Kunststoffvorformling bzw. dessen Tragring auf den beiden Rollen aufliegt. Daneben wäre es auch möglich, dass mehrere Rollenkörper hintereinander angeordnet sind, welche sich auch mit unterschiedlichen Geschwindigkeiten drehen können. Auch kann eine Neigung der Rollenkörper in ihrer Gesamtheit oder auch eine Neigung einzelner Segmente (auch bezüglich zueinander) geändert werden.

Bei einer weiteren vorteilhaften Ausführungsform erfasst wenigstens eine Messeinrichtung den Messwert berührungslos. Insbesondere ist wenigstens eine Messeinrichtung eine optisch erfassende Messeinrichtung und besonders bevorzugt ist diese Messeinrichtung aus einer Gruppe von Messeinrichtungen ausgewählt, welche Lichtschranken, Kamerasysteme und dergleichen umfasst.

Bei einem weiteren vorteilhaften Verfahren werden die Stellgrößen mittels wenigstens zwei Regeleinrichtungen geregelt. In diesem Fall ist bevorzugt die gesamte Regelung in wenigstens zwei Stufen ausgeführt. Dabei ist es denkbar, dass eine erste Stufe schleichende bzw. langfristige Änderungen der Umgebungen ausgleicht. Bei dieser ersten Stufe kann es sich dabei um einen Mittelwertregler, beispielsweise um einen PI-Regler handeln. Dieser Regler kann dabei jeweils auf einen Sollwert einer Bewegungsgeschwindigkeit in Abhängigkeit einer Vielzahl von gemessenen Werten reagieren und auf diese Weise langsame Änderungen ausgleichen.

Bei einer weiteren Stufe kann es sich um eine Regelung handeln, welche auf kurzfristige Schwankungen, insbesondere kurzfristige Schwankungen in der Dosierung reagiert und welche als Regelziel einen konstanten Staupunkt insbesondere im Bereich einer Messeinrichtung herbeiführt. Hierbei kann es sich beispielsweise um einen P-Regler handeln.

Dabei wirken sich - wie oben erwähnt - die beiden Regelungen sowohl auf die erste als auch auf die zweite Stellgröße aus. Die erste Stellgröße kann sich dabei auf die Dosiereinheit, wie beispielsweise einen Hochförderer und angeschlossene Zuführbänder beziehen. Die zweite Regeleinheit bzw. Regelgröße kann sich auf einen Staubereich bzw. eine Staueinheit beziehen und damit auf eine Anpassung der jeweiligen Rollenbewegungen. Bevorzugt wird daher eine kaskadierte Regelung verwendet.

Dabei ist es denkbar, dass eine dieser Regelungen, insbesondere diejenige, welche zum schnellen Regulieren vorgesehen ist (Aufholregler) für beide Regelungen bzw. beide Stellgrößen auf das gleiche Ausgangssignal aus dem System reagiert und insbesondere auf ein Ausgangssignal der oben erwähnten zweiten Messeinrichtung. Dieses gleiche Signal kann auch für die zweite Regeleinrichtung, einen Mittelwertregler, oder auch für zwei Mittelwertregler verwendet werden.

Daneben kann jedoch diese zweite Regeleinrichtung auch über ein zweites Ausgangssignal, nämlich dasjenige der ersten Messeinrichtung, angepasst werden. Auf diese Weise ergibt sich ein günstiges Verhältnis zwischen der Aufhol- und der Dosiereinheit. Vorteilhaft ist es dabei möglich, dass die beiden Stellgrößen in getrennten Regelkreisen geregelt werden. Dabei ist es jedoch auch möglich, dass wenigstens einer dieser Regelkreise und bevorzugt beide Regelkreise zwei hintereinander geschaltete Regeleinrichtungen aufweisen, wobei bevorzugt ein Ausgangssignal der ersten Regeleinrichtung der zweiten Regeleinrichtung zugeführt wird.

Bevorzugt wird damit eine Regeleinrichtung in ihrer Gesamtheit auf die mechanischen Eigenschaften des Systems reagieren und kann sich bevorzugt auch daran anpassen. So ist es möglich, dass während eines Einrichtbetriebes ein bestimmtes Verhältnis eingelernt wird und im Laufe des Betriebes auf langsame Änderungen automatisch reagiert werden kann.

Bevorzugt kann auch eine Auswertung wenigstens einer Regeleinrichtung erfolgen, beispielsweise einer Regeleinrichtung, welche die Transporteinrichtung und insbesondere die Rollen steuert. Durch diese Auswertung kann eine quantitative Vergleichsbasis für unterschiedliche Eigenschaften der Rollen oder auch unterschiedliche Eigenschaften der Transporteinrichtung geschaffen werden. Durch diese Auswertung ist es möglich, dass wenigstens eine Regeleinrichtung auch als Messsystem für Gleit- und Reibeigenschaften der Rollen verwendet wird.

Die Erfindung schlägt damit eine selbstlernende Regelung für eine Sortierung von Kunststoffvorformlingen vor, die sich bevorzugt selbstständig den sich ändernden Bedingungen anpasst. Dabei kann beispielsweise mittels eines optischen Sensors eine Messung eines Belegungsgrads an einer Zuführeinrichtung gemessen werden, weiterhin kann auch eine Zählung der Kunststoffvorformlinge an einem Zuführband vorgenommen werden, beispielsweise mittels einer 3D-Erkennung. Daneben wäre jedoch auch eine Zählung der Kunststoffvorformlinge an dem Zuführband möglich, beispielsweise durch eine Impulsauswertung fallender Kunststoffvorformlinge etwa mittels Akustik oder mittels druckempfindlicher Platten. Weiterhin wird bei einem bevorzugten Verfahren eine Vorsortierung und/oder Zentrierung der Kunststoffvorformlinge mit der Zuführeinrichtung, beispielsweise mittels eines Zuführbandes, vorgenommen.

Bevorzugt werden von den Messeinrichtungen aufgenommene Werte wenigstens zeitweise abgespeichert. Bevorzugt können diese abgespeicherten Messwerte auch als Referenzwerte für die Regelung dienen. Bei einem weiteren bevorzugten Verfahren werden Ausgangswerte einer Regeleinrichtung einer weiteren Regeleinrichtung zugeführt. Besonders bevorzugt werden Ausgangssignale bzw. Ausgangswerte eines PI-Reglers, insbesondere eines als Mittelwertreglers fungierenden PI-Reglers einem P-Regler, insbesondere einem als Aufholregler fungierenden P-Regler zugeführt.

Bei einem weiteren bevorzugten Verfahren weist die Vorrichtung ein Rückführband auf, wobei dieses besonders bevorzugt eingesetzt werden kann, indem Lücken in dem Zuführband genutzt werden, um dieses Rückführband zuzuschalten.

Vorteilhaft wird mittels einer weiteren Messeinrichtung ein Belegungsgrad an diesem Zuführband aufgenommen.

Bei einem weiteren vorteilhaften Verfahren erfolgt ein selbstständiges Nachführen der Regelparameter in Abhängigkeit von einem Umgebungswert, wie beispielsweise einem Temperaturwert oder einem Feuchtewert. Dies kann dabei sowohl bei den Rollen als auch bei dem Zuführband oder einem etwaigen Rückführband erfolgen.

Bei einer weiteren vorteilhaften Ausführungsform wird damit auch wenigstens ein Umgebungswert gemessen, wie insbesondere ein Temperaturwert oder ein Feuchtigkeitswert.

Bevorzugt erfolgt ein selbstständiges Nachführen der Regelgrößen mit einer selbstständigen Lernfunktion.

Bei einem weiteren vorteilhaften Verfahren werden auch nicht mehr regelbare Zustände erkannt und in Reaktion auf derartige nicht regelbare Zustände Maßnahmen eingeleitet, wie etwa ein Notstopp, ein Auswurf von Kunststoffvorformlingen oder dergleichen. So können beispielsweise geteilte Rollensegmente vorgesehen sein, welche einen Auswurf einzelner Kunststoffvorformlinge im Fehler- oder Bedarfsfall ermöglichen.

Die einzelnen Rollen oder Rollensegmente können dabei gleitend ausgeführt sein, es wäre jedoch auch möglich, dass diese von einer vorgegebenen Kontur, wie etwa einer schuppen-oder schneckenförmigen Kontur, angetrieben werden.

Wie oben erwähnt, kann auch eine Veränderung der Parallelität der beiden Rollen zueinander erfolgen, welche beispielsweise von dem Vortriebbedarf abhängen kann. Zu diesem Zweck ist es möglich, dass die Rollen oder wenigstens eine Rolle auf verschiebbaren Schlitten angeordnet sind. Vorzugsweise werden jedoch die beiden Rollen symmetrisch zueinander bewegt. Auf diese Weise kann die eigentliche Transportbahn der Kunststoffvorformlinge beibehalten werden, was insbesondere im Hinblick auf nachgeordnete Transporteinrichtungen, wie etwa Transportsterne, Transportschienen bevorzugt mit Luftunterstützung und dergleichen, sinnvoll ist.

Daneben wäre es auch möglich, wie oben erwähnt die Steigung der Rollensegmente zu verändern, was ebenfalls in Abhängigkeit von einem Vortriebbedarf erfolgen kann. Daneben könnte auch die Rollenanzahl bzw. die Anzahl der Segmente verändert werden, wobei auch eine weitere Antriebseinkopplung Anwendung finden könnte. So könnten beispielsweise anliegende Reibrollen vorgesehen sein, welche gleichzeitig auch eine Abstützung in der Richtung einer Umwucht übernehmen könnten.

Auf diese Weise ist es möglich, dass sich das System den Einflüssen der Umgebung und/oder der Qualität der zu sortierenden Objekte anpasst und damit die Leistungsfähigkeit gegenüber heutigen Systemen verbessert wird.

Bei einem weiteren vorteilhaften Verfahren ist wenigstens eine der genannten Regeleinrichtungen ein Mittelwertgeber oder ein Aufholregler. Wie oben erwähnt, sind dabei diese Regeleinrichtungen vorteilhaft hintereinander geschaltet. Vorteilhaft wird ein Ausgangswert des Mittelwertreglers einem Aufholregler zugeführt.

Die vorliegende Erfindung ist weiterhin auf eine Vorrichtung zum Transportieren von Kunststoffvorformlingen gerichtet. Diese Vorrichtung weist eine Zuführeinrichtung auf, sowie eine dieser Zuführeinrichtung in einer Transportrichtung der Kunststoffvorformlinge nachgeordnete Transporteinrichtung, wobei die Zuführeinrichtung die Kunststoffvorformlinge der Transporteinrichtung zuführt und wobei diese Transporteinrichtung einen ersten Rollenkörper sowie einen zweiten Rollenkörper aufweist, welche sich im Wesentlichen parallel zueinander erstrecken und wobei der/die Kunststoffvorformlinge zwischen diesen Rollenkörpern transportierbar ist bzw. sind.

Erfindungsgemäß weist die Vorrichtung eine erste Messeinrichtung auf, welche wenigstens einen ersten für einen Belegungszustand der Vorrichtung mit den Kunststoffvorformlingen charakteristischen Wert erfasst sowie eine zweite Messeinrichtung, welche sich in der Transporteinrichtung der Kunststoffvorformlinge nach der ersten Messeinrichtung befindet und welche einen zweiten für den Belegungszustand der Vorrichtung mit den Kunststoffvorformlingen charakteristischen Wert erfasst. Weiterhin weist die Vorrichtung eine Steuerungseinrichtung auf, welche unter Zugrundelegung beider Werte wenigstens eine Stellgröße der Zuführeinrichtung oder der Transporteinrichtung steuert und insbesondere regelt.

Es wird daher auch vorrichtungsseitig vorgeschlagen, dass mittels zwei an unterschiedlichen Stellen positionierten Messeinrichtungen, wie beispielsweise Lichtschranken oder Kamerasystemen, Belegungszustände erfasst werden und anhand dieser gemessenen Werte wenigstens eine der beiden Stellgrößen verändert wird bzw. ein Antrieb der Zuführeinrichtung oder der Transporteinrichtung gesteuert wird.

Bei dem Antrieb der Transporteinrichtung kann es sich beispielsweise um einen Elektromotor handeln, der die Drehung der einen oder beider Rollen bewirkt.

Die vorliegende Erfindung ist weiterhin auf die Verwendung einer Schaltungsanordnung zum Steuern einer Vorrichtung zum Transportieren von Behältnissen und insbesondere einer Vorrichtung der oben beschriebenen Art gerichtet. Diese Schaltungsanordnung weist eine erste steuerbare Antriebseinrichtung auf, welche eine Zuführung der Behältnisse an eine Transporteinrichtung bewirkt, sowie eine zweite steuerbare Antriebseinrichtung, welche den Transport der Behältnisse mittels der Transporteinrichtung beeinflusst. Weiterhin weist die Schaltungsanordnung eine erste Messeinrichtung auf, welche wenigstens einen für einen Belegungszustand der Vorrichtung mit den Behältnissen charakteristischen Wert erfasst sowie eine zweite Messeinrichtung, welche sich in der Transportrichtung der Kunststoffvorformlinge nach der ersten Messeinrichtung befindet und welche einen zweiten für den Belegungszustand der Vorrichtung mit den Behältnissen charakteristischen Wert erfasst.

Erfindungsgemäß weist die Schaltungsanordnung eine erste Regeleinrichtung auf, welche einen Regeleingang aufweist, über welchen der ersten Regeleinrichtung ein Signal der zweiten Messeinrichtung zuführbar ist sowie eine zweite Regeleinrichtung, welche ebenfalls einen Regeleingang aufweist, über welchen der zweiten Regeleinrichtung ein Signal der ersten Messeinrichtung zuführbar ist und wobei ein Ausgangssignal der zweiten Regeleinrichtung der ersten steuerbaren Antriebseinrichtung zuführbar ist.

Unter der jeweiligen Zuführbarkeit wird insbesondere verstanden, dass Leitungsverbindungen bzw. auch drahtlose Verbindungen bestehen, welche die jeweiligen Signale bzw. Messgrößen von den Messeinrichtungen an die Regeleinrichtung übermitteln.

Bei der Antriebseinrichtung, welche die Zuführung der Behältnisse an eine Transporteinrichtung bewirkt, kann es sich beispielsweise um einen Antriebsmotor handeln, der ein Zuführband antreibt. Bei der Antriebseinrichtung, welche den Transport der Behältnisse mittels der Transporteinrichtung beeinflusst, kann es sich beispielsweise um einen Motor handeln, der die oben erwähnten Rollen antreibt. Es könnte sich jedoch auch um eine Antriebseinrichtung handeln, mittels der beispielsweise eine Neigung der Rollen verändert werden kann oder mit der auch eine Parallelität der beiden Rollen oder dergleichen verändert werden kann.

Damit wird hier vorgeschlagen, dass wenigstens zwei Regeleinrichtungen vorgesehen sind, welche die erste Antriebseinrichtung steuern bzw. regeln. Die oben erwähnten Signale sind - wie oben erwähnt - für die Belegungszustände mit den Behältnissen charakteristisch und stellen jeweils auch die Eingänge der Regeleinrichtungen dar bzw. werden gegebenenfalls gemeinsam mit weiteren Signalen der Regeleinrichtung zugeführt bzw. aufaddiert.

Wie oben erwähnt, handelt es sich bei den Behältnissen insbesondere um Kunststoffvorformlinge. Die Schaltungsanordnung kann jedoch auch für andere Behältnisgattungen ausgeführt werden, beispielsweise für Kunststoffflaschen, für Glasflaschen, für Getränkedosen, für Behältnisverschlüsse, Getränkekisten und dergleichen. Daneben kann die Schaltungsanordnung auch für Anlagen zur Verfügung gestellt werden, welche beispielsweise ein Verpacken oder Palettieren von Behältnissen bewirken.

Vorteilhaft ist die zweite Regeleinrichtung der ersten Regeleinrichtung nachgeschaltet und bevorzugt wird damit ein Ausgangssignal der ersten Regeleinrichtung der zweiten Regeleinrichtung zugeführt. Damit ist besonders bevorzugt die Schaltungsanordnung derart aufgebaut, dass beide Regeleinrichtungen in den gleichen Regelkreis integriert sind und bevorzugt seriell in diesem Regelkreis geschaltet sind.

Bevorzugt ist die erste Regeleinrichtung ein PI-Regler und/oder die zweite Regeleinrichtung ein P-Regler. Der PI-Regler weist dabei bevorzugt einen hohen I-Anteil auf, welcher sich insbesondere auf die Produktionsgeschwindigkeit der zuzuführenden Maschine bezieht. Dieser befindet sich bevorzugt in einem Bereich zwischen 50 und 1.000 Maschinentakten.

Bei einer weiteren vorteilhaften Ausführungsform weist die Schaltungsanordnung noch einen weiteren Regelkreis für die zweite Antriebseinrichtung auf. Dieser zweite Regelkreis weist bevorzugt ebenfalls zwei serielle Regeleinrichtungen auf. Vorteilhaft sind der erste Regelkreis und der zweite Regelkreis hinsichtlich der Regeleinrichtungen parallel ausgeführt. Bei einer weiteren vorteilhaften Ausgestaltung kann wenigstens einem Regelkreis das Messsignal der zweiten Messeinrichtung zweimal zugeführt werden und insbesondere sowohl einer ersten als auch einer zweiten Regeleinrichtung dieses zweiten Regelkreises.

Bei einer weiteren vorteilhaften Ausführungsform weist wenigstens eine Regeleinrichtung und bevorzugt die erste Regeleinrichtung auch einen Eingang auf, über den dieser Regeleinrichtung auch ein Signal der ersten Messeinrichtung zuführbar ist. Damit kann bei dieser Ausgestaltung einer Regeleinrichtung sowohl das Signal der ersten Messeinrichtung als auch das Signal der zweiten Messeinrichtung zugeführt werden. Vorzugsweise weist die Schaltungsanordnung zwei Regelkreise auf, wobei diese zwei Regelkreise bevorzugt jeweils wenigstens zwei seriell angeordnete Regeleinrichtungen aufweisen. Bevorzugt wird jedoch je einer Regeleinrichtung beider Regelkreise ein Wert bzw. ein Messsignal der zweiten Messeinrichtung zugeführt.

Weitere Vorteile und Ausführungsformen ergeben sich aus den beigefügten Zeichnungen:

Darin zeigen:
- Fig. 1: eine Darstellung einer Vorrichtung zum Transportieren von Kunststoffvorformlingen;
- Fig. 2: eine schematische Darstellung einer erfindungsgemäßen Vorrichtung in einer ersten Ausführungsform;
- Fig. 3: eine Darstellung einer erfindungsgemäßen Vorrichtung in einer zweiten Ausführungsform;
- Fig. 4: eine Detaildarstellung zur Veranschaulichung einer Rollenaufteilung; und
- Fig. 5: eine schematische Darstellung einer Schaltungsanordnung zum Steuern einer derartigen Vorrichtung.

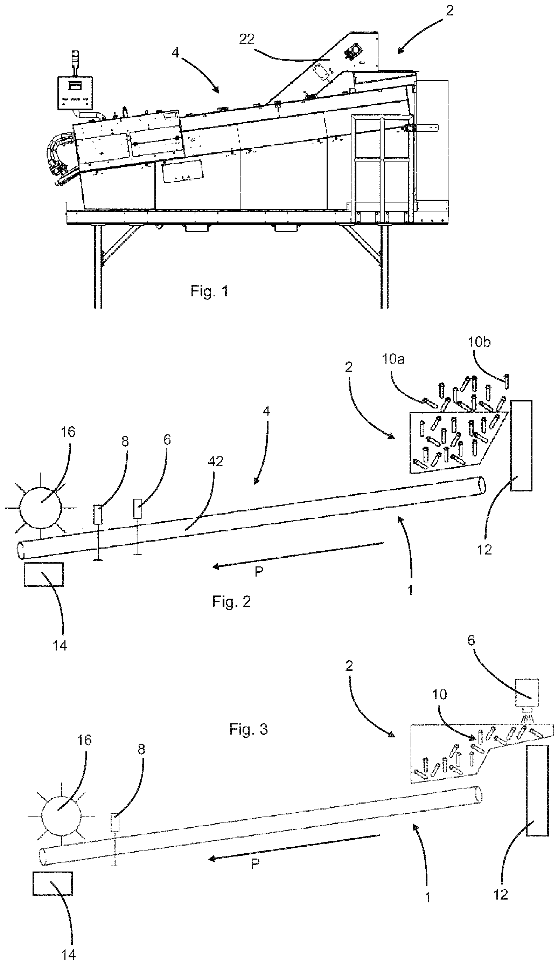

Fig. 1 zeigt eine Darstellung einer Vorrichtung zum Transportieren von Kunststoffvorformlingen. Das Bezugszeichen 2 bezieht sich dabei auf eine Zuführeinrichtung zum Zuführen der Kunststoffvorformlinge. Diese Zuführeinrichtung weist dabei einen Steigförderer 22 auf, über den die Kunststoffvorformlinge einem Auffangbehältnis zugeführt werden. Von dieser Zuführeinrichtung 2 gelangen die Kunststoffvorformlinge auf die Transporteinrichtung 4, von der sie in der Fig. 1 schräg nach unten gefördert werden. Diese Vorrichtung nach dem Stand der Technik weist dabei eine Vielzahl von Lichtschranken auf, um den Transport der Kunststoffvorformlinge zu steuern.

Figur 2 zeigt eine schematische Darstellung einer erfindungsgemäßen Vorrichtung 1 zum Transportieren von Kunststoffvorformlingen 10. Diese Kunststoffvorformlinge 10 weisen dabei einen Tragring 10a auf, der einen größeren Querschnitt aufweist als sich ein daran anschließender Grundkörper 10b. Auf diese Weise können die Kunststoffvorformlinge zwischen zwei Rollenkörpern 42 und 44 (letztere nicht gezeigt) transportiert werden. Diese beide Rollenkörper 42, 44 werden von wenigstens einer Antriebseinrichtung 14 angetrieben und während des Transports können so die Kunststoffvorformlinge entlang dieser Rollen hinabgleiten.

Das Bezugszeichen 12 kennzeichnet eine Antriebseinrichtung, welche die Zuführung der Kunststoffvorformlinge steuern kann, beispielsweise, indem eine Zuführgeschwindigkeit geregelt wird.

Das Bezugszeichen 16 kennzeichnet eine Auswurfeinrichtung, welche dazu dient, um fehlorientierte Kunststoffvorformlinge auszuwerfen. Dabei kann es sich um eine Auswurfeinrichtung handeln, welche mit fehlorientierten Kunststoffvorformlingen in Kontakt gelangt und diese so aus dem Transportpfad auswerfen kann. Das Bezugszeichen P kennzeichnet eine Transportrichtung der zu sortierenden bzw. der zu transportierenden Kunststoffvorformlinge 10.

Das Bezugszeichen 6 kennzeichnet eine erste Messeinrichtung, welche in einem bestimmten Bereich des Transportpfades einen Belegungszustand mit Kunststoffvorformlingen bestimmt. Bei dieser Einrichtung kann es sich beispielsweise um eine Lichtschrankeneinrichtung handeln, welche bestimmen kann, wie viele Kunststoffvorformlinge - insbesondere pro Zeiteinheit - diese erste Messeinrichtung passieren.

Das Bezugszeichen 8 kennzeichnet eine zweite Messeinrichtung, bei der es sich hier um eine Staupunktlichtschranke handelt. Auch diese Lichtschranke kann hier den Belegungszustand messen, wobei dies stromabwärts bezüglich der ersten Messeinrichtung erfolgt. Bei der ersten Messeinrichtung handelt es sich damit um eine Dosierlichtschranke.

Bei der in Figur 3 gezeigten Ausführungsform ist die erste Messeinrichtung nicht entlang der Transporteinrichtung 4 angeordnet, sondern in einem Bereich der Zuführeinrichtung 2. Dabei kann es sich beispielsweise um eine Kamera handeln, welche ein Bild ausgeben kann, welches für die Anzahl der Kunststoffvorformlinge im Bereich der Zuführeinrichtung repräsentativ ist. In Abhängigkeit von den beiden Signalen dieser beiden Messeinrichtungen 6 und 8 wird die Vorrichtung gesteuert und werden insbesondere sowohl die Antriebseinrichtung 12 als auch die Antriebseinrichtung 14 gesteuert.

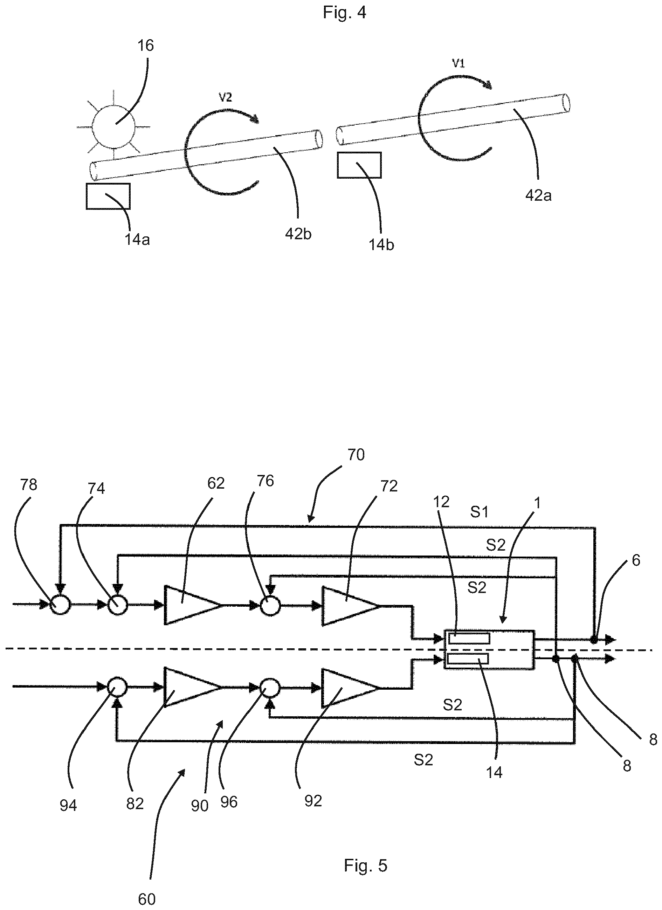

Figur 4 zeigt eine mögliche Ausgestaltung einer Steuerung des Bewegungsablaufes. Bei dieser Ausgestaltung ist eine Rolle 42 in zwei Rollensegmente unterteilt, welche von unterschiedlichen Antriebseinrichtungen 14a, 14b angetrieben werden. Dabei ist insbesondere auch ein unterschiedlich schneller Antrieb dieser Segmente 42a, 42b möglich. Auch auf diese Weise kann die Transportgeschwindigkeit der Kunststoffvorformlinge zumindest abschnittsweise gesteuert werden.

Figur 5 zeigt eine Darstellung einer Schaltanordnung 60 zum Steuern der Vorrichtung. Diese Schaltanordnung weist wiederum die oben erwähnte Vorrichtung 1 auf, wobei schematisch auch die beiden Antriebseinrichtungen 12 und 14 dargestellt sind. Daneben sind zwei Regelkreise 70 und 90 erkennbar. Der Regelkreis 70 dient zum Ansteuern der ersten Antriebseinrichtung 12 und der Regelkreis 90 dient zum Ansteuern der Antriebseinrichtung 14.

Der Regelkreis 70 weist eine erste Regeleinrichtung 62 sowie eine zweite Regeleinrichtung 72 auf. Bei der ersten Regeleinrichtung handelt es sich um einen Mittelwertregler, der dazu dient, um schleichende Änderungen auszugleichen. Die zweite Regeleinrichtung 72 ist hier als Aufholregler ausgeführt, der auf kurzfristige Schwankungen, beispielsweise in der Dosierung, reagieren kann. Entsprechend werden der ersten Regeleinrichtung 62 sowohl die Messsignale S1 der ersten Messeinrichtung als auch die Messsignale S2 der zweiten Messeinrichtung 8 zugeführt. Zu diesem Zweck sind die Eingänge 78 und 74 vorgesehen. Die Signale können dabei jeweils seriell aufgeschaltet bzw. hinzuaddiert werden. Ein Ausgangssignal der ersten Regeleinrichtung wird der zweiten Regeleinrichtung 72 zugeführt, wobei zusätzlich nochmals das Messsignal S2 der zweiten Messeinrichtung zugeführt wird. Auf Basis dieser Signale wird wiederum mit einem Ausgang der zweiten Regeleinrichtung 72 die Antriebseinrichtung 12 gesteuert.

Der zweite Regelkreis 90 weist eine erste Regeleinrichtung 82 und eine zweite Regeleinrichtung 92 auf. Hier werden sowohl der ersten Regeleinrichtung 82 als auch der zweiten Regeleinrichtung 92 nur die Messsignale der ersten Messeinrichtung 6 zugeführt. Dies ist insoweit auch sinnvoll, da die zweite Antriebseinrichtung 14 der ersten Antriebseinrichtung 12 nachgeordnet ist und die zweite Antriebseinrichtung, etwa ein Antrieb für die Rollen, nicht auf kurzfristige Schwankungen, welche insbesondere auch von der Messeinrichtung 6 erfasst werden, reagieren kann. Damit ist der zweite Regelkreis 90 jedoch nicht abhängig von einem Ausgangssignal der ersten Messeinrichtung 6.

Es wäre jedoch auch denkbar, eine einheitliche bzw. eine gemeinsame Regeleinrichtung, welche sowohl die Aufgaben der ersten Regeleinrichtung 72 als auch diejenigen der zweiten Regeleinrichtung 92 wahrnimmt, vorzusehen.

### Bezugszeichenliste

- P: Transportrichtung
- S1, S2: Messsignal
- 2: Zuführeinrichtung
- 4: Transporteinrichtung
- 6: erste Messeinrichtung
- 8: zweite Messeinrichtung
- 10: Kunststoffvorformlinge
- 10a: Tragring
- 10b: Grundkörper
- 12: Antriebseinrichtung
- 14: Antriebseinrichtung
- 16: Auswurfeinrichtung
- 22: Steigförderer
- 42: Rolle
- 42a: Segment
- 42b: Segment
- 44: Rolle
- 62: erste Regeleinrichtung
- 70: Regelkreis
- 72: zweite Regeleinrichtung
- 74,78: Eingang
- 82: erste Regeleinrichtung
- 90: Regelkreis
- 92: zweite Regeleinrichtung

## Patentansprüche

1. Verfahren zum Transportieren von Kunststoffvorformlingen, wobei die Kunststoffvorformlinge (10) mittels einer Zuführeinrichtung (2) einer Transporteinrichtung (4) zugeführt werden und die Transporteinrichtung (4) einen ersten Rollenkörper (42) sowie einen zweiten Rollenkörper (44) aufweist, welche sich im Wesentlichen parallel zueinander erstrecken und der Kunststoffvorformling zwischen diesen Rollen transportiert wird, wobei ein Abschnitt (10a) der Kunststoffvorformlinge (10) von beiden Rollen gestützt wird und wobei ein weiterer Abschnitt der Kunststoffvorformlinge (10) zwischen den Rollenkörpern (42, 44) hindurchtritt
**dadurch gekennzeichnet, dass**
mittels einer ersten Messeinrichtung (6) ein wenigstens ein erster für einen Belegungszustand der Kunststoffvorformlinge (10) charakteristischer Wert erfasst wird und mittels einer zweiten Messeinrichtung (8), welche sich in der Transportrichtung (P) der Kunststoffvorformlinge nach der ersten Messeinrichtung (6) befindet, ein zweiter für den Belegungszustand der Kunststoffvorformlinge charakteristischer Wert erfasst wird und unter Zugrundelegung beider Werte wenigstens eine Stellgröße der Zuführeinrichtung oder der Transporteinrichtung geregelt wird.

2. Verfahren nach Anspruch 1,
**dadurch gekennzeichnet, dass**
wenigstens eine Stellgröße der Zuführeinrichtung (2) unter Zugrundelegung beider Werte gesteuert wird.

3. Verfahren nach wenigstens einem der vorangegangenen Ansprüche,
**dadurch gekennzeichnet, dass**
wenigstens eine Stellgröße der Transporteinrichtung (4) aus einer Gruppe von Stellgrößen ausgewählt ist, welche eine Drehgeschwindigkeit der Rollenkörper (42, 44), eine Neigung der Rollenkörper (42, 44) einen Abstand der Rollenkörper (42, 44) zueinander, eine Parallelität der Rollenkörper (42, 44) oder eine Segmentierung der Rollenkörper (42, 44) umfasst.

4. Verfahren nach wenigstens einem der vorangegangenen Ansprüche,
**dadurch gekennzeichnet, dass**
wenigstens eine Messeinrichtung den Wert berührungslos erfasst.

5. Verfahren nach wenigstens einem der vorangegangenen Ansprüche,
**dadurch gekennzeichnet, dass**
die Stellgrößen mittels wenigstens zweier Regeleinrichtungen geregelt werden.

6. Verfahren nach Anspruch 5,
**dadurch gekennzeichnet, dass**
wenigstens eine Regeleinrichtung ein P-Regler oder ein PI-Regler ist.

7. Verfahren nach Anspruch 6,
**dadurch gekennzeichnet, dass**
Ausgangswerte des PI-Reglers dem Aufholregler zugeführt werden.

8. Vorrichtung (1) zum Transportieren von Kunststoffvorformlingen mit einer Zuführeinrichtung (2) und einer dieser Zuführeinrichtung in einer Transportrichtung der Kunststoffvorformlinge (10) nachgeordneten Transporteinrichtung (4), wobei die Zuführeinrichtung die Kunststoffvorformlinge (10) der Transporteinrichtung (4) zuführt und wobei diese Transporteinrichtung einen ersten Rollenkörper (42) sowie einen zweiten Rollenkörper (44) aufweist, welche sich im Wesentlichen parallel zueinander erstrecken und der Kunststoffvorformling zwischen diesen Rollen transportierbar ist,
**dadurch gekennzeichnet, dass**
die Vorrichtung eine erste Messeinrichtung (6) aufweist, welche wenigstens einen ersten für einen Belegungszustand der Vorrichtung mit den Kunststoffvorformlingen charakteristischen Wert erfasst sowie eine zweite Messeinrichtung (8), welche sich in der Transportrichtung (P) der Kunststoffvorformlinge nach der ersten Messeinrichtung (6) befindet und welche einen zweiten für den Belegungszustand der Vorrichtung mit den Kunststoffvorformlinge charakteristischen Wert erfasst und eine Steuerungseinrichtung welche unter Zugrundelegung beider Werte wenigstens eine Stellgröße der Zuführeinrichtung (2) oder der Transporteinrichtung (4) regelt.

9. Verwendung einer Schaltungsanordnung (60) zum Steuern einer Vorrichtung (1) zum Transportieren von Behältnissen (10) nach Anspruch 8 mit einer ersten steuerbaren Antriebseinrichtung (12) welche eine Zuführung der Behältnisse an eine Transporteinrichtung (4) bewirkt, mit einer zweiten steuerbaren Antriebseinrichtung (14) welche den Transport der Behältnisse mittels der Transporteinrichtung beeinflusst mit einer ersten Messeinrichtung (6) welche wenigstens einen ersten für einen Belegungszustand der Vorrichtung (1) mit den Behältnissen (10) charakteristischen Wert erfasst sowie mit einer zweiten Messeinrichtung (8), welche sich in der Transportrichtung (P) der Behältnisse (10) nach der ersten Messeinrichtung (6) befindet und welche einen zweiten für den Belegungszustand der Vorrichtung mit den Behältnissen (10) charakteristischen Wert erfasst
**dadurch gekennzeichnet, dass**
die Schaltungsanordnung (60) eine erste Regeleinrichtung (62) aufweist, welche einen Regeleingang (74) aufweist, über welchen der ersten Regeleinrichtung (62) ein Signal (S1) der zweiten Messeinrichtung (8) zugeführt wird sowie eine zweite Regeleinrichtung (72), welche ebenfalls einen Regeleingang (76) aufweist, über welchen der zweiten Regeleinrichtung (72) ein Signal (S2) der zweiten Messeinrichtung (8) zuführbar ist und wobei ein Ausgangssignal der zweiten Regeleinrichtung (72) der ersten steuerbaren Antriebseinrichtung (12) zugeführt wird.

10. Verwendung einer Schaltungsanordnung nach Anspruch 9,
**dadurch gekennzeichnet, dass**
wenigstens eine Regeleinrichtung (62) auch einen Eingang (78) aufweist, über den dieser Regeleinrichtung auch ein Signal der ersten Messeinrichtung (6) zugeführt wird.

## Claims

1. A method of conveying plastics material pre-forms, wherein the plastics material pre-forms (10) are supplied to a conveying device (4) by means of a supply device (2) and the conveying device (4) has a first roller body (42) and a second roller body (44) which extend substantially parallel to each other, and the plastics material pre-form is conveyed between these rollers, wherein a portion (10a) of the plastics material pre-forms (10) is supported by the two rollers and wherein a further portion of the plastics material pre-forms (10) passes through between the roller bodies (42, 44),
**characterized in that**
a at least one first value characteristic of a state of occupation of the plastics material pre-forms (10) is detected by means of a first measuring instrument (6) and a second value characteristic of the state of occupation of the plastics material pre-forms is detected by means of a second measuring instrument (8) which is situated downstream of the first measuring instrument (6) in the conveying direction (P) of the plastics material pre-forms, and at least one setting variable of the supply device or the conveying device is controlled on the basis of the two values.

2. A method according to claim 1,
**characterized in that**
at least one setting variable of the supply device (2) is controlled on the basis of the two values.

3. A method according to at least one of the preceding claims,
**characterized in that**
at least one setting variable of the conveying device (4) is selected from a group of setting variables which includes a rotational speed of the roller bodies (42, 44), an inclination of the roller bodies (42, 44), a distance of the roller bodies (42, 44) from each other, a parallelism of the roller bodies (42, 44) or a segmentation of the roller bodies (42, 44).

4. A method according to at least one of the preceding claims,
**characterized in that**
at least one measuring instrument detects the value without contact.

5. A method according to at least one of the preceding claims,
**characterized in that**
the setting variables are regulated by means of at least two regulating devices.

6. A method according to claim 5,
**characterized in that**
at least one regulating device is a P controller or a PI controller.

7. A method according to claim 6,
**characterized in that**
initial values of the PI controller are supplied to the catch-up regulator.

8. An apparatus (1) for conveying plastics material pre-forms with a supply device (2) and a conveying device (4) arranged downstream of this supply device in a conveying direction of the plastics material pre-forms (10), wherein the supply device supplies the plastics material pre-forms (10) to the conveying device (4), and wherein this conveying device has a first roller body (42) and a second roller body (44), which extend substantially parallel to each other, and the plastics material pre-form is capable of being conveyed between these rollers,
**characterized in that**
the apparatus has a first measuring instrument (6) which detects at least one first value characteristic of a state of occupation of the apparatus with the plastics material pre-forms, and a second measuring instrument (8) which is situated downstream of the first measuring instrument (6) in the conveying direction (P) of the plastics material pre-forms and which detects a second value characteristic of the state of occupation of the apparatus with the plastics material pre-forms, and a control device which controls at least one setting variable of the supply device (2) or the conveying device (4) on the basis of the two values.

9. Use of a switching arrangement (60) for controlling an apparatus (1) for conveying containers (10) according to claim 8, with a first controllable drive device (12) which effects a supply of the containers to a conveying device (4), with a second controllable drive device (14) which influences the conveying of the containers by means of the conveying device, with a first measuring instrument (6) which detects at least one first value characteristic of a state of occupation of the apparatus (1) with the containers (10), and with a second measuring instrument (8) which is situated downstream of the first measuring instrument (6) in the conveying direction (P) of the containers (10) and which detects a second value characteristic of the state of occupation of the apparatus with the containers (10),
**characterized in that**
the switching arrangement (60) has a first regulating device (62) which has a regulation input (74), by way of which a signal (S1) of the second measuring instrument (8) is supplied to the first regulating device (62), and a second regulating device (72) which likewise has a regulation input (76), by way of which a signal (S2) of the second measuring instrument (8) is capable of being supplied to the second regulating device (72), and wherein an output signal of the second regulating device (72) is supplied to the first controllable drive device (12).

10. A switching arrangement according to claim 9,
**characterized in that**
at least one regulating device (62) also has an input (78) by way of which a signal of the first measuring instrument (6) is also capable of being supplied to this regulating device.

## Revendications

1. Procédé pour transporter des préformes en matière plastique, dans lequel les préformes en matière plastique (10) étant acheminées au moyen d'un équipement d'acheminement (2) d'un équipement de transport (4), et l'équipement de transport (4) ayant un premier corps de rouleau (42) ainsi qu'un second corps de rouleau (44), lesquels s'étendant sensiblement parallèle l'un par rapport à l'autre, et la préforme en matière plastique étant transportée entre ces rouleaux, dans lequel une section (10a) des préformes en matière plastique (10) étant supportée par les deux rouleaux et dans lequel une autre section des préformes en matière plastique (10) passe entre les corps de rouleau (42, 44),
**caractérisé en ce qu'**au moins une première valeur caractéristique d'un état d'occupation des préformes en matière plastique (10) est détectée au moyen d'un premier équipement de mesure (6), et une seconde valeur caractéristique d'un état d'occupation des préformes en matière plastique est détectée au moyen d'un second équipement de mesure (8), lequel se situe après le premier équipement de mesure (6) dans la direction de transport (P) des préformes en matière plastique, et au moins une grandeur de commande de l'équipement d'acheminement ou de l'équipement de transport est réglée sur la base des deux valeurs.

2. Procédé selon la revendication 1, **caractérisé en ce qu'**au moins une grandeur de commande de l'équipement d'acheminement (2) est contrôlée sur la base des deux valeurs.

3. Procédé selon l'une au moins des revendications précédentes,
**caractérisé en ce qu'**au moins une grandeur de commande de l'équipement de transport (4) est choisie dans un groupe de grandeurs de commande, lequel comprend une vitesse de rotation des corps de rouleau (42, 44), une inclinaison des corps de rouleau (42, 44), une distance des corps de rouleau (42, 44) entre eux, un parallélisme des corps de rouleau (42, 44) ou une segmentation des corps de rouleau (42, 44).

4. Procédé selon l'une au moins des revendications précédentes, **caractérisé en ce qu'**au moins un équipement de mesure détecte la valeur sans contact.

5. Procédé selon l'une au moins des revendications précédentes, **caractérisé en ce que** les grandeurs de commande sont réglées au moyen d'au moins deux équipements de réglage.

6. Procédé selon la revendication 5, **caractérisé en ce qu'**au moins un équipement de réglage est un régulateur P ou un régulateur PI.

7. Procédé selon la revendication 6, **caractérisé en ce que** les valeurs de sortie du régulateur PI sont acheminées vers le régulateur de rattrapage.

8. Dispositif (1) pour transporter des préformes en matière plastique, comprenant un équipement d'acheminement (2) et un équipement de transport (4) agencé en aval dudit équipement d'acheminement dans une direction de transport des préformes en matière plastique (10), dans lequel l'équipement d'acheminement achemine les préformes en matière plastique (10) vers l'équipement de transport (4), et dans lequel ledit équipement de transport présente un premier corps de rouleau (42) ainsi qu'un second corps de rouleau (44), lesquels s'étendant sensiblement parallèle l'un par rapport à l'autre, et la préforme en matière plastique est transportable entre ces rouleaux,
**caractérisé en ce que** le dispositif présente un premier équipement de mesure (6), lequel détecte au moins une première valeur caractéristique d'un état d'occupation du dispositif avec les préformes en matière plastique, ainsi qu'un second équipement de mesure (8), lequel se situe après le premier équipement de mesure (6) dans la direction de transport (P) des préformes en matière plastique et lequel détecte une seconde valeur caractéristique d'un état d'occupation du dispositif avec les préformes en matière plastique, et un équipement de contrôle, lequel règle au moins une grandeur de commande de l'équipement d'acheminement (2) ou de l'équipement de transport (4) sur la base des deux valeurs.

9. Utilisation d'un agencement de circuit (60) pour contrôler un dispositif (1) destiné à transporter des récipients (10) selon la revendication 8, comprenant un premier équipement d'entraînement (12) contrôlable, lequel opère un acheminement des récipients vers un équipement de transport (4), un second équipement d'entraînement (14) influant sur le transport des récipients au moyen de l'équipement de transport avec un premier équipement de mesure (6), lequel détecte au moins une première valeur caractéristique d'un état d'occupation du dispositif (1) avec les récipients (10) ainsi qu'un second équipement de mesure (8), lequel se situe dans la direction de transport (P) des récipients (10) après le premier équipement de mesure (6) et lequel détecte une seconde valeur caractéristique d'un état d'occupation du dispositif avec les récipients (10),
**caractérisé en ce que** l'agencement de circuit (60) comprend un premier équipement de réglage (62) présentant une entrée de réglage (74) via laquelle un signal (S1) du second équipement de mesure (8) est acheminé vers le premier équipement de réglage (62) ainsi qu'un second équipement de réglage (72) présentant également une entrée de réglage (76) via laquelle un signal (S2) du second équipement de mesure (8) peut être acheminé vers le second équipement de réglage (72) et dans lequel un signal de sortie du second équipement de réglage (72) est acheminé vers le premier équipement d'entraînement (12) contrôlable.

10. Agencement de circuit selon la revendication 9, **caractérisé en ce qu'**au moins un équipement de réglage (62) présente également une entrée (78) via laquelle un signal du premier équipement de mesure (6) peut également être acheminé vers ledit équipement de réglage.
